# FASCICULE DE BREVET EUROPEEN

(11) **EP 1 828 074 B1**
(45) Date de publication et mention de la délivrance du brevet: **17.06.2020**
(21) Numéro de dépôt: 05801664.3
(22) Date de dépôt: 08.11.2005
(51) Int. Cl.: C03C 17/36

(54) **VITRAGE**
GLASSCHEIBE
GLAZING

(30) Priorité: 08.11.2004 EP 04105589
(43) Date de publication de la demande: 05.09.2007
(73) Titulaire: AGC Glass Europe, 1348 Louvain-la-Neuve (BE)
(72) Inventeur: ROQUINY, Philippe, 6040 Jumet (BE); DEPAUW, Jean-Michel, 6040 Jumet (BE)
(74) Mandataire: Bayot, Daisy
(86) Numéro de dépôt international: PCT/EP2005/055818
(87) Numéro de publication internationale: WO 2006/048463

(56) Documents cités:
- EP-A- 0 719 876
- US-A- 4 546 050
- US-A- 5 902 505
- US-A1- 2004 106 017

## Description

La présente invention se rapporte à un vitrage comprenant au moins un revêtement multicouche déposé sur une feuille de verre, ainsi qu'à un vitrage multiple comprenant au moins un tel vitrage.

Les vitrages dont il est fait référence dans la présente invention comprennent un revêtement multicouche, déposé sur une feuille de verre, qui comporte en général au moins deux couches réfléchissant le rayonnement infrarouge à base de métaux nobles, en particulier à base d'argent, déposées par pulvérisation cathodique sous pression réduite dans un dispositif bien connu de type magnétron.

Ces vitrages, outre leurs fonctions optiques notamment de transparence à la lumière, ont aussi des fonctions d'ordre thermique. Ils ont notamment une fonction de protection solaire. Dans ce cadre, ils sont utilisés pour réduire le risque de surchauffe excessive d'un espace clos, ayant de grandes surfaces vitrées, dû à l'ensoleillement, et ainsi réduire l'effort de climatisation à consentir en été. Pour l'utilisation dans les bâtiments, ils sont en général assemblés en vitrage double associés à une autre feuille de verre, dépourvue ou non de revêtement, le revêtement multicouche se trouvant à l'intérieur de l'espace entre les deux feuilles de verre. Lorsqu'ils sont utilisés dans le domaine automobile, ils sont généralement assemblés par feuilletage à une autre feuille de verre, dépourvue ou non de revêtement, à l'intervention d'un film thermoplastique tel que du PVB, le revêtement multicouche se trouvant entre les deux feuilles de verre.

Les vitrages auxquels la présente invention se rapporte ont également une autre fonction thermique, celle de vitrage à faible émissivité. Ils sont alors normalement assemblés en vitrage double avec le revêtement multicouche en contact avec un gaz (air ou autre gaz), éventuellement à pression réduite. A ce titre, ils sont utilisés pour améliorer l'isolation thermique des grandes surfaces vitrées et réduire ainsi les déperditions d'énergie et les coûts de chauffage en période froide. Le revêtement multicouche du vitrage selon l'invention est en effet un revêtement à faible émissivité qui réduit la déperdition de chaleur par rayonnement infrarouge de grande longueur d'onde.

Pour assurer la fonction de protection solaire, le vitrage auquel se rapporte la présente invention doit laisser passer le moins de rayonnement solaire incident total possible, c'est-à-dire qu'il doit présenter un facteur solaire (FS) le plus faible possible. Il est cependant fortement souhaitable qu'il garantisse une transmission lumineuse (TL) aussi élevée que possible de manière à procurer un niveau d'éclairement suffisant à l'intérieur du bâtiment. Ces exigences quelque peu conflictuelles traduisent la volonté d'obtenir un vitrage présentant une sélectivité (S) élevée, définie par le rapport de la transmission lumineuse au facteur solaire. Pour répondre à ces exigences, on doit subdiviser la couche réfléchissant l'infrarouge en au moins deux couches séparées par un diélectrique, ce qui complique la structure du revêtement multicouche en augmentant le nombre de couches.

La transmission lumineuse (TL) est le pourcentage du flux lumineux incident, de l'Illuminant D65, transmis par le vitrage. Le facteur solaire (FS ou g) est le pourcentage du rayonnement énergétique incident qui est d'une part directement transmis par le vitrage et d'autre part absorbé par celui-ci puis rayonné par sa face opposée à la source d'énergie.

Il est également souhaitable que les vitrages répondent à certains critères esthétiques en terme de réflexion lumineuse (RL), c'est-à-dire le pourcentage du flux lumineux incident -de l'Illuminant D65- réfléchi par le vitrage, et de couleur en réflexion et en transmission. La combinaison d'une haute sélectivité avec une faible réflexion lumineuse conduit parfois à l'obtention de teintes pourpres en réflexion qui sont très peu esthétiques.

Dans le domaine du bâtiment, on est souvent amené à effectuer une opération de renforcement mécanique du vitrage, telle qu'une trempe thermique, pour améliorer sa résistance aux contraintes mécaniques. Dans le domaine de l'automobile, on est aussi souvent amené à bomber le vitrage pour être conforme aux caractéristiques du véhicule. Dans les processus de fabrication et de mise en forme des vitrages, il y a certains avantages à effectuer ces opérations de trempe et de bombage sur le substrat déjà revêtu au lieu de revêtir un substrat déjà mis en forme. Ces opérations sont réalisées à une température relativement élevée, température à laquelle la couche réfléchissant l'infrarouge, à base d'argent, a tendance à se détériorer et à perdre ses propriétés optiques et ses propriétés vis-à-vis du rayonnement infrarouge. Il faut donc prendre des précautions toutes particulières pour réaliser une structure de revêtement qui soit apte à subir un traitement thermique de trempe ou de bombage, parfois référencé ci-après par l'expression « bombable-trempable », sans perdre ses propriétés optiques et/ou énergétiques qui en font sa raison d'être.

Des revêtements multicouches à deux couches réfléchissant l'infrarouge aptes à subir un traitement thermique ont déjà été proposés, voir par exemple US 2004/0106017, US 5 902 505 ou EP 719 876 . Du point de vue de l'efficacité et de la rentabilité industrielle, la difficulté, pour ces structures relativement complexes, est non seulement d'avoir un vitrage comprenant un tel revêtement qui supporte des traitements thermiques sévères à température très élevées sans détérioration de ses propriétés, mais également d'avoir un vitrage, dont le processus de fabrication est le moins complexe possible, qui soit reproductible aisément et qui puisse être constitués à partir de feuilles de verre d'épaisseurs différentes sans modification significative de la structure du revêtement pour tenir compte de la différence dans le temps de séjour à température élevée du traitement thermique. Une modification de la durée du traitement thermique subi par le vitrage peut changer significativement ses propriétés, notamment énergétiques et/ou optiques, par exemple sa transmission lumineuse. Or la durée du traitement thermique de trempe ou de bombage dépend de l'épaisseur de la feuille de verre. Lorsqu'on fabrique en série des vitrages portant un revêtement multicouche à partir de feuilles de verre d'épaisseurs différentes, on doit dès lors adapter la structure du revêtement pour que les vitrages après trempe répondent tous aux spécifications du cahier des charges, non seulement pour tenir compte éventuellement du changement optique dû à la différence d'épaisseur de verre, mais aussi pour tenir compte du comportement thermique du revêtement qui sera soumis à des conditions différentes.

L'invention se rapporte à un vitrage, apte à subir un traitement thermique du type trempe ou bombage, comprenant au moins un revêtement multicouche déposé sur une feuille de verre, caractérisé en ce que le revêtement multicouche comprend, en séquence à partir de la feuille de verre, au moins :
a) un premier diélectrique, comportant au moins une couche comportant un oxyde mixte zinc-étain contenant au moins 12% d'étain, de préférence au moins 20% d'étain,
b) une première couche réfléchissant l'infrarouge à base d'argent,
d) un second diélectrique,
e) une seconde couche réfléchissant l'infrarouge à base d'argent,
g) un troisième diélectrique, comportant au moins une couche comportant un oxyde mixte zinc-étain contenant au moins 12% d'étain, de préférence au moins 20% d'étain,
h) une couche supérieure de protection à base de nitrure ou d'oxynitrure de Ti, Zr, Hf, V, Nb, Ta, Cr, de leurs alliages, ou à base de nitrure ou d'oxynitrure d'alliage d'un ou plusieurs de ces métaux avec Al et/ou B.

On a découvert que la structure de base du revêtement multicouche du vitrage selon l'invention permet de réaliser des vitrages présentant une faible émissivité et une protection solaire à haute sélectivité, bombables-trempables, qui peuvent répondrent à des critères esthétiques exigeants avec une excellente reproductibilité et ceci même avec des épaisseurs différentes de feuille de verre. Compte-tenu de la sévérité de ce type de traitement thermique, de la complexité de la structure du revêtement et des exigences de qualité des vitrages visés par l'invention, ce résultat est tout à fait surprenant.

Il semble que l'oxyde mixte zinc-étain, contenant au moins 12% et de préférence au moins 20% d'étain, présent dans les premier et troisième diélectriques joue un rôle favorable en isolant les couches à base d'argent par rapport au verre et à l'environnement extérieur au revêtement et en les protégeant vis-à-vis de l'oxygène migrant au travers des couches. L'effet bénéfique de protection vis-à-vis de l'oxygène est plus marqué lorsque l'oxyde mixte contient au moins 20% d'étain. Les expressions similaires à « oxyde mixte zinc-étain contenant au moins 12% d'étain » utilisées dans la présente description signifie qu'il y a au moins 12% en poids d'étain dans l'oxyde mixte zinc-étain par rapport au poids total de zinc et d'étain dans l'oxyde mixte. Il en est de même pour les pourcentages de zinc dans l'oxyde mixte donnés ci-après, ainsi que pour d'autres valeurs que 12% qui est pris ici à titre d'illustration.

La couche supérieure de protection à base de nitrure ou d'oxynitrure de Ti, Zr, Hf, V, Nb, Ta, Cr, de leurs alliages, ou à base de nitrure ou d'oxynitrure d'alliage d'un ou plusieurs de ces métaux avec Al et/ou B protège efficacement l'ensemble de la structure sous-jacente lors des manipulations avant traitement thermique, ainsi que pendant le traitement thermique au cours duquel ces nitrures s'oxydent, par exemple, le TiN s'oxyde pour former essentiellement du TiO₂. Cette couche supérieure de protection sous forme de nitrure peut déjà être partiellement oxydée avant traitement thermique. Elle peut éventuellement être aussi recouverte d'une autre couche telle que par exemple une mince couche finale améliorant encore la protection du revêtement, par exemple comme décrit et revendiqué dans la demande de brevet européen 04 105 583.1 au nom de la demanderesse déposée le même jour.

La couche supérieure de protection contient avantageusement du nitrure ou de l'oxynitrure de titane. Elle peut par exemple comprendre du nitrure ou de l'oxynitrure d'un alliage d'aluminium ou de zirconium avec du titane. De préférence, la couche supérieure de protection est à base de TiN. C'est une matière qui convient très bien aux buts de l'invention. Elle s'obtient aisément en production industrielle par pulvérisation cathodique. Elle protège efficacement le revêtement pendant les manipulations du vitrage et elle s'oxyde aisément, notamment pendant le traitement thermique, pour donner du TiO₂ très transparent, tout en protégeant les couches sous-jacentes de l'oxydation.

Les couches réfléchissant l'infrarouge à base d'argent peuvent comprendre des alliages d'argent avec notamment du Pd.

Le second diélectrique peut être formé de toute matière adéquate bien connue dans le domaine des couches déposées par pulvérisation cathodique à pression réduite. Cette matière diélectrique peut notamment être choisie parmi les oxydes, les nitrures, les oxynitrures métalliques, par exemple, l'alumine (Al₂O₃), le nitrure d'aluminium (AIN), l'oxynitrure d'aluminium (AlNO), la magnésie (MgO), l'oxyde de niobium (Nb₂O₅), la silice (SiO₂), le nitrure de silicium (Si₃N₄), le dioxyde de titane (TiO₂), l'oxyde de bismuth (Bi₂O₅), l'oxyde d'yttrium (Y₂O₃), l'oxyde d'étain (SnO₂), l'oxyde de tantale (Ta₂O₅), l'oxyde de zinc (ZnO), l'oxyde de zirconium (ZrO₂) ou parmi des sulfures comme le sulfure de zinc (ZnS).

De préférence, le second diélectrique comporte au moins une couche comportant un oxyde mixte zinc-étain, seul ou en complément d'une ou plusieurs des matières diélectriques citées ci-dessus. On a trouvé que ceci renforçait la résistance du revêtement au traitement thermique.

Outre la couche comportant un oxyde mixte zinc-étain, les premier et troisième diélectriques peuvent aussi inclure une ou plusieurs des matières diélectriques citées ci-dessus.

Alternativement ou en complément, au moins un des premier, second ou troisième diélectriques comporte au moins deux couches d'oxyde mixte zinc-étain de compositions différentes, la couche la plus riche en zinc étant disposée le plus près de, et de préférence en contact direct avec, la couche réfléchissant l'infrarouge à base d'argent qui lui succède dans la dite séquence. Dans ce cas, de préférence, tous les diélectriques comportent au moins deux couches d'oxyde mixte zinc-étain de compositions différentes. Avantageusement, le premier oxyde mixte zinc-étain comprend de 40 à 60% d'étain, de préférence pour former une composition proche du stannate de zinc Zn₂SnO₄, et le second oxyde mixte zinc-étain comprend de 80 à 98% de zinc, de préférence environ 90% de zinc et 10% d'étain. On obtient ainsi à la fois une bonne résistance du revêtement au traitement thermique et un effet favorable sur les propriétés optiques et énergétiques de la ou des couches d'argent en contact avec la couche riche en zinc.

De préférence, une couche barrière est disposée sur au moins une des couches réfléchissant l'infrarouge, entre cette couche et le diélectrique qui lui fait suite dans la séquence. Avantageusement, une couche barrière est disposée sur chacune des couches réfléchissant l'infrarouge. La ou les couches barrières sont destinées à protéger les couches à base d'argent, notamment pendant le traitement thermique, mais aussi en cours de dépôt des diélectriques supérieurs, surtout si ceux-ci sont formés dans une atmosphère contenant de l'oxygène qui risquerait d'oxyder l'argent ou dans une atmosphère contenant de l'azote. On peut utiliser un métal qui s'oxyde plus facilement que l'argent, tel que par exemple le titane (Ti), le niobium (Nb), le tantale (Ta), le zinc (Zn), le cuivre (Cu), l'aluminium (Al), le chrome (Cr) ou l'alliage nickel-chrome (NiCr), leurs mélanges ou alliages. On peut aussi utiliser un sous-oxyde, tel que NiCrOx ou TiOx. TiOx peut éventuellement être déposé à partir d'une cible céramique de TiOx en atmosphère neutre.

De préférence, la ou au moins une des couches barrières comprend un premier mince film de métal ou de composé métallique et est surmontée d'un second mince film d'un composé d'un métal différent du premier mince film, les deux films étant disposés entre la couche réfléchissant l'infrarouge et le diélectrique qui suit dans la séquence. Avantageusement, toutes les couches barrières comprennent un premier mince film de métal ou de composé métallique et sont surmontées d'un second mince film d'un composé d'un métal différent du premier mince film, les deux films étant tous deux disposés entre la couche réfléchissant l'infrarouge et le diélectrique qui suit dans la séquence. En choisissant judicieusement les matières des deux minces films, on peut obtenir une protection plus efficace des couches d'argent en attribuant un rôle différent à chacun des films.

De préférence, la ou au moins une des couches barrières est formée d'un premier mince film de NiCr, ou de sous-oxyde de NiCr, disposé directement sur l'argent et elle est surmontée d'un second mince film de TiO₂ disposé sur le mince film de NiCr ou de sous-oxyde de NiCr et sous le diélectrique qui suit dans la séquence. De préférence, toutes les couches barrières sont formées d'un premier mince film de NiCr et elles sont chacunes surmontées d'un second mince film de TiO₂. Le film de TiO₂ retient l'oxygène et le film de NiCr réduit la diffusion de l'oxygène vers l'argent, on obtient ainsi une protection très efficace de l'argent. Le mince film de TiO₂ peut être déposé sous forme sous-oxydée, par exemple à partir d'une cible céramique de TiOx en atmosphère neutre ou oxydante. De préférence, il est déposé sous forme métallique (Ti) et il est oxydé par l'atmosphère oxydante utilisée pour le dépôt de la couche suivante. En tout état de cause, après dépôt du revêtement à la sortie du magnétron, ce film est sous la forme substantiellement oxydée TiO₂. Le film NiCr quant à lui s'oxyde fortement essentiellement au cours du traitement thermique du vitrage revêtu.

Pour des pays très chauds, il est utile que le vitrage final, assemblé sous la forme d'un double vitrage, présente un facteur solaire inférieur à 30% et même inférieur à 25% de manière à filtrer le plus possible d'énergie solaire. Dans ce cas, le blocage des rayons infrarouges n'est plus suffisant, il faut aussi filtrer l'énergie portée par le rayonnement visible pour parvenir à réduire suffisamment l'énergie totale transmise par le vitrage. On peut alors introduire, dans la structure du revêtement, une couche absorbante, tel un métal comme le titane, le zirconium, le niobium ou d'autres métaux connus dans le domaine, leurs sous-oxydes ou leur nitrures. L'invention permet d'obtenir des vitrages de ce type qui sont aisément reproductibles. Il faut toutefois consentir dès lors à une plus faible transmission lumineuse qui peut descendre en dessous des 40%.

Avantageusement, le revêtement multicouche est tel que, lorsqu'il est déposé sur une feuille de verre sodo-calcique float clair ayant 4 mm d'épaisseur, le vitrage, apte à subir un traitement thermique du type trempe ou bombage, selon l'invention possède une transmission lumineuse TL, selon l'Illuminant D65/2°, d'au moins 65%, et de préférence d'au moins 68%, une réflexion lumineuse RL externe, selon le même Illuminant, inférieure à 12%, de préférence inférieure ou égale à 9% et un facteur solaire FS, évalué côté verre selon la norme IS09050(2003), inférieur ou égale à 46%, de préférence inférieur ou égale à 45%. Ces propriétés permettent d'obtenir après traitement thermique un vitrage à transmission lumineuse élevée tout en étant particulièrement bénéfique du point de vue de la protection solaire.

De préférence, le revêtement multicouche est tel que, lorsqu'il est déposé sur une feuille de verre sodo-calcique float clair ayant 4 mm d'épaisseur, le vitrage, apte à subir un traitement thermique du type trempe ou bombage, selon l'invention présente une teinte, examinée en réflexion côté verre sous l'Illuminant D65/10°, représentée par une valeur de L* comprise entre 28 et 37, une valeur de a* comprise entre -2 et +4 et une valeur de b* comprise entre -21 et -3, avantageusement comprise entre -20 et -8. Ces caractéristiques optiques permettent d'obtenir après traitement thermique un vitrage ayant une très bonne qualité esthétique pouvant répondre à des critères particulièrement sévères. Avantageusement, la teinte examinée en transmission sous l'Illuminant D65/2° est représentée par une valeur de a* négative et une valeur de b* inférieure à +10, de préférence inférieure à +5.

De préférence, le vitrage selon l'invention présente une émissivité ε égale ou inférieur à 0,035, et avantageusement égale ou inférieur à 0,03. On peut ainsi obtenir des faibles valeurs du coefficient U (ou k), ce qui est très utile pour conserver la chaleur en hiver.

L'invention s'applique particulièrement bien à des vitrages dont la feuille de verre possède une épaisseur de 2 à 6 mm. Cependant, la qualité de son revêtement et sa tenue particulièrement bonne au traitement thermique permettent une épaisseur plus importante de la feuille de verre. C'est pourquoi, selon un autre mode réalisation préféré de l'invention, la feuille de verre a une épaisseur comprise entre 6 et 14 mm. Pour effectuer un traitement thermique sur des feuilles de verre aussi épaisses, il faut les soumettre plus longtemps à une température fort élevée. Le vitrage selon l'invention s'adapte particulièrement bien à ces conditions difficiles.

De préférence, le revêtement multicouche présente essentiellement la structure suivante à partir du verre :
20-45 nm ZnSnOx / 9-11 nm Ag / première couche barrière / 70-85 nm ZnSnOx / 13-15 nm Ag / seconde couche barrière / 20-40 nm ZnSnOx / 2-6 nm TiN. On a trouvé qu'en utilisant cette structure, on peut obtenir aisément des vitrages, à fonction de contrôle solaire et d'isolation thermique, de haute qualité qui sont facilement reproductibles, même pour des épaisseurs de verre différentes. ZnSnOx représente un oxyde mixte zinc-étain contenant au moins 20% d'étain.

Avantageusement, le revêtement multicouche présente essentiellement la structure suivante à partir du verre :
29-37 nm d'oxyde mixte zinc-étain à plus de 40% Sn et plus de 30% Zn / 5-13 nm d'oxyde mixte zinc-étain à plus de 80% Zn et plus de 2% Sn / 9-11 nm Ag / 0.5-2 nm NiCr / 2-6 nm TiO₂ / 65-80 nm d'oxyde mixte zinc-étain à plus de 40% Sn et plus de 30% Zn / 8-15 nm d'oxyde mixte zinc-étain à plus de 80% Zn et plus de 2% Sn / 13-15 nm Ag / 0.5-2 nm NiCr / 2-6 nm TiO₂ / 5-13 nm d'oxyde mixte zinc-étain à plus de 80% Zn et plus de 2% Sn / 15-30 nm d'oxyde mixte zinc-étain à plus de 40% Sn et plus de 30% Zn / 2-6 nm TiN. Avantageusement, les oxydes mixtes zinc-étain à plus de 40% Sn et plus de 30% Zn sont des compositions proches du stannate de zinc Zn₂SnO₄. On a trouvé que cette structure offre une gamme de propriétés optiques et énergétiques après trempe qui permet d'obtenir des vitrages répondant parfaitement à une demande du marché du bâtiment.

Le vitrage selon l'invention tel que décrit ci-dessus est un vitrage qui n'est normalement pas prévu pour installation tel quel. Le vitrage, muni de son revêtement multicouche, doit encore subir un traitement thermique de trempe et/ou de bombage avant d'être installé. Il permet d'obtenir aisément et de manière facilement reproductible, un vitrage trempé et/ou bombé efficace du point de vue de la protection solaire à haute sélectivité et de l'isolation thermique, et ayant un aspect esthétique agréable. En général, le traitement thermique du vitrage revêtu n'est pas réalisé directement après le dépôt du revêtement multicouche. Il peut par exemple être vendu tel quel et donc transporté chez un client. Ce dernier procédera alors au traitement thermique adéquat avant de l'installer dans un bâtiment, par exemple.

Ce vitrage ainsi revêtu et traité thermiquement est nouveau en soi, c'est pourquoi l'invention s'étend à un vitrage trempé et/ou bombé constitué d'un vitrage tel que décrit ci-dessus qui a subi un traitement thermique de trempe et/ou de bombage après dépôt du revêtement multicouche.

En particulier, le revêtement multicouche du vitrage trempé et/ou bombé selon l'invention est tel que, lorsqu'il est déposé sur une feuille de verre sodo-calcique float clair ayant 4 mm d'épaisseur, le vitrage possède avantageusement une transmission lumineuse TL, selon l'Illuminant D65/2°, d'au moins 73%, et de préférence d'au moins 75%, une réflexion lumineuse RL externe, selon le même Illuminant, inférieure à 12%, de préférence inférieure ou égale à 9 % et un facteur solaire FS, évalué côté verre selon la norme ISO9050(2003), inférieur à 50%, de préférence inférieur à 49%. Ceci fournit un vitrage très performant sur le plan de la protection solaire avec une sélectivité élevée et une faible réflexion lumineuse. D'un point de vue esthétique, le revêtement multicouche est tel que, lorsqu'il est déposé sur une feuille de verre sodo-calcique float clair ayant 4 mm d'épaisseur, le vitrage présente de préférence une teinte, examinée en réflexion côté verre sous l'Illuminant D65/10°, représentée par une valeur de L* comprise entre 28 et 37, une valeur de a* comprise entre -2 et +2 et une valeur de b* comprise entre -2 et -10. Ceci lui donne un aspect visuel agréable à regarder et qui s'accommode bien dans l'ensemble d'un paysage. Avantageusement, la teinte en transmission sous l'Illuminant D65/2° est représentée par une valeur de a* négative et une valeur de b* inférieure à +5.

De préférence, l'émissivité ε du vitrage est égale ou inférieur à 0,03, et avantageusement égale ou inférieur à 0,025. Après traitement thermique, le vitrage selon l'invention possède une émissivité plus faible qu'avant traitement. Ceci est un avantage particulier au vitrage selon l'invention qui permet d'obtenir des valeurs du coefficient U particulièrement faible pour un vitrage trempé et/ou bombé, toutes autres propriétés optiques et thermiques étant égales.

De préférence, le revêtement multicouche, du vitrage trempé et/ou bombé selon l'invention, présente la structure suivante à partir du verre :
20-45 nm ZnSnOx / 9-11 nm Ag / première couche barrière / 70-85 nm ZnSnOx / 13-15 nm Ag / seconde couche barrière / 20-40 nm ZnSnOx / 2-6 nm TiO₂. Et avantageusement, il présente la structure suivante à partir du verre :

29-37 nm d'oxyde mixte zinc-étain à plus de 40% Sn et plus de 30% Zn / 5-13 nm d'oxyde mixte zinc-étain à plus de 80% Zn et plus de 2% Sn / 9-11 nm Ag / 0.5-2 nm NiCrOx / 2-6 nm TiO₂ / 65-80 nm d'oxyde mixte zinc-étain à plus de 40% Sn et plus de 30% Zn / 8-15 nm d'oxyde mixte zinc-étain à plus de 80% Zn et plus de 2% Sn / 13-15 nm Ag / 0.5-2 nm NiCrOx / 2-6 nm TiO₂ / 5-13 nm d'oxyde mixte zinc-étain à plus de 80% Zn et plus de 2% Sn / 15-30 nm d'oxyde mixte zinc-étain à plus de 40% Sn et plus de 30% Zn / 2-6 nm TiO₂. Avantageusement, les oxydes mixtes zinc-étain à plus de 40% Sn et plus de 30% Zn sont des compositions proches du stannate de zinc Zn₂SnO₄. Cette structure fournit des vitrages à fonctions thermiques très performants et de fabrication particulièrement stable en grande série, pouvant être constitués de feuilles de verre d'épaisseurs fort différentes sans modification de la structure du revêtement.

La possibilité d'obtenir des vitrages, dont le revêtement a subi un traitement thermique de trempe et/ou bombage, ayant des épaisseurs de feuilles de verre significativement différentes avec une même structure de revêtement et dont les propriétés optiques et thermiques sont équivalentes est nouveau, et surprenant en soi. En effet, jusqu'à présent, la sévérité des traitements thermiques de trempe ou de bombage oblige d'adapter en conséquence la structure du revêtement multicouche selon les épaisseurs des feuilles de verre pour conserver les même propriétés optiques et/ou énergétiques, car la durée de ce traitement change selon l'épaisseur du verre.

L'invention s'étend dès lors aussi à un ensemble de vitrages tels que décrits ci-dessus, soit aptes à subir un traitement thermique du type trempe ou bombage soit trempés et/ou bombés, comprenant au moins deux vitrages dont les feuilles de verre ont des épaisseurs qui diffèrent de plus de 10% et portent des revêtements multicouches ayant la même structure de couches, en ce y compris les épaisseurs de chacune des couches ou des films qui sont identiques à au plus 1% de différence, les deux vitrages étant d'aspect similaire après traitement thermique.

De préférence, le dit ensemble de vitrages comprend au moins un vitrage dont l'épaisseur de la feuille de verre est comprise entre 2 et 7 mm et un vitrage dont l'épaisseur de la feuille de verre est comprise entre 7 et 14 mm, et ces deux feuilles de verre portent des revêtements multicouches ayant la même structure de couches, en ce y compris les épaisseurs de chacune des couches ou des films qui sont identiques à au plus 1% de différence. Cette très faible différence est vraiment surprenante. Elle inclut en fait uniquement la faible adaptation qu'il faut faire, essentiellement sur l'épaisseur du troisième diélectrique, pour tenir compte du changement optique dû à la différence d'épaisseur du verre. Comme le revêtement présente une excellente tenue au traitement thermique, il n'est pas nécessaire de l'adapter à la durée du traitement. Une autre manière d'exprimer cette particularité est de soumettre plusieurs vitrages revêtus identiques à des durées différentes de traitement thermique à haute température pour constater que les propriétés optiques et thermiques ne changent pas significativement. L'avantage du point de vue de la fabrication en série est manifeste.

L'invention s'étend encore à un vitrage multiple comprenant au moins un vitrage tel que décrit ci-dessus ayant subi un traitement thermique de trempe, qui réalise une bonne isolation thermique, une protection solaire efficace à haute sélectivité et un aspect esthétique agréable, et ayant des propriétés optiques et énergétiques telles qu'indiquées dans les revendications ci-après.

L'invention sera maintenant décrite plus en détail, de manière non limitative, à l'aide des exemples de réalisations préférées ci-après.

### Exemples :

### Exemple 1.

Une feuille de verre sodo-calcique ordinaire de 2 m sur 1 m et de 4 mm d'épaisseur est placée dans un dispositif de pulvérisation cathodique, assisté d'un champ magnétique, à pression réduite (environ 0,3 Pa) du type magnétron. Sur cette feuille de verre, on dépose un revêtement multicouche qui comprend, en séquence :
a) Un premier diélectrique formé de deux couches d'oxydes déposés dans une atmosphère réactive constituée d'un mélange d'argon et d'oxygène à partir de cathodes d'alliages zinc-étain de compositions différentes. Le premier oxyde mixte zinc-étain, d'environ 30 nm d'épaisseur, est formé à partir d'une cathode d'un alliage zinc-étain à 52% en poids de zinc et 48% en poids d'étain pour former la structure spinelle de stannate de zinc Zn₂SnO₄. Le second oxyde mixte zinc-étain ZnSnOₓ, d'environ 5 nm, est déposé à partir d'une cible d'un alliage zinc-étain à 90% en poids de zinc et 10% en poids d'étain.
b) Une première couche réfléchissant l'infrarouge formée d'environ 10,3 nm d'argent à partir d'une cible d'argent pratiquement pur dans une atmosphère neutre d'argon.
c) Une première couche barrière formée d'un premier mince film de NiCr de 0.5 nm d'épaisseur déposé à partir d'une cible d'un alliage à 80% de Ni et à 20% de Cr. Cette couche barrière est surmontée d'un second mince film de 2.5 nm d'épaisseur déposé à partir d'une cible de titane. Ces minces films sont tous deux déposés dans un flux d'argon légèrement contaminé par l'oxygène des chambres voisines. Il est à noter que l'atmosphère oxydante du plasma lors du dépôt de la couche suivante, décrite ci-dessous, oxyde totalement le mince film de titane de telle sorte qu'à la fin du processus de dépôt du second diélectrique, le titane est substantiellement totalement oxydé pour former une couche compacte de TiO₂. En variante, il est aussi possible de déposer la couche sous forme de TiOx partiellement oxydée. Cette couche peut aussi, par exemple, être déposée à partir d'une cible céramique de TiOx et être oxydée par le plasma utilisé pour le dépôt de la couche suivante.
d) Un second diélectrique formé de deux couches d'oxydes mixtes zinc-étain déposés dans une atmosphère réactive constituée d'un mélange d'oxygène et d'argon à partir de cathodes d'alliages zinc-étain de compositions différentes. Le premier oxyde mixte zinc-étain, d'environ 68 nm d'épaisseur, est déposé à partir d'une cible métallique d'un alliage de ZnSn à 52% de Zn et 48% de Sn (en poids) pour former la structure spinelle de stannate de zinc Zn₂SnO₄. Le second oxyde mixte zinc-étain ZnSnOₓ, d'environ 15 nm d'épaisseur, est déposé à partir d'une cible d'un alliage de ZnSn à 90% de Zn et 10% de Sn (en poids).
e) Une seconde couche réfléchissant l'infrarouge formée d'environ 14,7 nm d'argent à partir d'une cible d'argent pratiquement pur dans une atmosphère constituée de 100% d'argon.
f) Une seconde couche barrière formée d'un premier mince film de 0,5 de NiCr et surmontée d'un second mince film de 2,5 nm de Ti, de la même manière que pour la première couche barrière.
g) Un troisième diélectrique formé de deux couches d'oxydes déposés dans une atmosphère réactive constituée d'un mélange d'oxygène et d'argon à partir de cathodes d'alliages zinc-étain de compositions différentes. Le premier oxyde mixte zinc-étain ZnSnOₓ, d'environ 5 nm d'épaisseur, est déposé à partir d'une cible métallique d'un alliage de ZnSn à 90% de Zn et 10% de Sn (en poids). Le second oxyde mixte zinc-étain, d'environ 30 nm d'épaisseur, est déposé à partir d'une cible d'un alliage de ZnSn à 52% de Zn et 48% de Sn (en poids) pour former la structure spinelle de stannate de zinc Zn₂SnO₄.
h) Le revêtement est ensuite finalisé par le dépôt d'une couche supérieure de protection de 2,5 nm de TiN déposé dans une atmosphère d'azote à partir d'une cible de titane.

Il faut noter que toutes les couches de ZnSnOₓ sont suffisamment oxydées pour qu'elles soient les plus transparentes possible. Il faut noter aussi que les épaisseurs de Ti et de TiN sont données en épaisseur de TiO₂ équivalent (c'est-à-dire provenant de l'oxydation du Ti ou du TiN), qui est leur état dans le produit fini après traitement thermique, et même déjà l'état dans le vitrage intermédiaire apte à subir un traitement thermique en ce qui concerne Ti.

Lorsqu'il sort du dispositif de dépôt de couche, le revêtement multicouche étant déposé sur la feuille de verre, le vitrage fraîchement revêtu présente les propriétés suivantes :
TL= 73,2% ; RL= 8,3%; FS= 44,1% ε (émissivité)= 0,03;
la teinte en transmission est exprimée par les valeurs suivantes :
   L*=88,5 ; a*=-4,2 ; b*=+1,9
   la teinte en réflexion côté verre est exprimée par les valeurs suivantes :
      L*= 34,7 ; a*= +0,6 ; b*=-12,1 ; λ_{d}=470,1 nm; pureté= 21,9%.

Dans la présente invention, les conventions suivantes sont utilisées pour les valeurs mesurées ou calculées. La transmission lumineuse (TL), la réflexion lumineuse (RL) et la teinte en transmission (valeurs CIELAB 1976 L*a*b*) sont mesurées avec l'Illuminant D65/2°. En ce qui concerne la teinte en réflexion, les valeurs CIELAB 1976 (L*a*b*), ainsi que la longueur d'onde dominante (λ_{d}) et la pureté (p) sont mesurées avec l'Illuminant D65/10°. Le facteur solaire (FS ou g) est calculé selon la norme ISO9050/2003. La valeur U (coefficient k) et l'émissivité (ε) sont calculés selon les normes EN673 et ISO 10292.

Le vitrage revêtu, avec le revêtement multicouche déposé sur la feuille de verre, subit ensuite une opération de trempe thermique au cours de laquelle il est soumis pendant 4 minutes à une température de 690°C puis refroidi brutalement par des jets d'air froid. Pendant ce traitement thermique, les minces films de NiCr des couches barrières s'oxydent suffisamment pour être transparents tout en constituant un écran efficace et stable pour protéger les couches d'argent. La couche supérieure de protection en TiN quant à elle s'oxyde pour former du TiO₂.

Après ce traitement, le vitrage revêtu et trempé présente les propriétés suivantes :
TL= 81,6% ; RL= 8,2%; FS=49% ε (émissivité)= 0,022;
la teinte en transmission est exprimée par les valeurs suivantes :
   L*=88,5 ; a*=-4,2 ; b*=+1,9;
   et la teinte en réflexion côté verre est exprimée par les valeurs suivantes :
      L*=34,5 ; a*=-0,8 ; b*=-7,6 ; λ_{D}=472,6 nm; p= 14,9% ;

Ce vitrage revêtu est ensuite assemblé en double vitrage avec une autre feuille de verre clair de 4 mm, le revêtement étant disposé côté de l'espace intérieur du double vitrage. L'espace entre les deux feuilles est de 15 mm et l'air y est remplacé par de l'argon. En observant le double vitrage côté verre du vitrage revêtu, le revêtement étant placé en position 2, c'est-à-dire qu'on voit d'abord le vitrage pourvu du revêtement observé côté verre, puis la feuille de verre clair sans couche, on note les propriétés suivantes :
TL= 73,7% ; RL= 13,6% ; FS=43,4% ; S=1,7 valeur U= 1,05 W/(m².K);
la teinte en transmission est exprimée par les valeurs suivantes :
   L*=88,8 ; a*=-3,4 ; b*=+3,0
   la teinte en réflexion est exprimée par les valeurs suivantes :
      L*=43,7 ; a*=-1,7 ; b*=-4,7 ; λ_{D}=475,8 nm; p=8,7%.

L'examen visuel en réflexion du vitrage double montre une teinte et un aspect uniformes sur toute la surface. L'invention permet donc d'obtenir un vitrage double à transmission lumineuse élevée et à haute performance énergétique (isolation thermique et protection anti-solaire) avec une très bonne qualité esthétique.

### Exemple 2.

L'exemple 2 est réalisé de la même manière que l'exemple 1 avec la même structure du revêtement multicouche. La différence avec l'exemple 1 est l'épaisseur de la feuille de verre portant le revêtement, qui est de 8 mm au lieu de 4 mm. Les propriétés obtenues sont les suivantes :
Lorsqu'il sort du dispositif de dépôt de couche, le vitrage fraîchement revêtu présente les propriétés suivantes :
TL= 71,5% ; RL= 8,1%; FS= 43,3% ε (émissivité)= 0,03;
la teinte en transmission est exprimée par les valeurs suivantes :
   L*=87,7; a*=-5,1 ; b*=+2,0
   la teinte en réflexion côté verre est exprimée par les valeurs suivantes :
      L*=34,4; a*=+0,3 ; b*=-11,6 ; λ_{d}=470,6 nm; pureté= 21,4%.

Le vitrage revêtu, comprenant le revêtement multicouche déposé sur la feuille de verre, subit ensuite une opération de trempe thermique au cours de laquelle il est soumis pendant 8 minutes à une température de 690°C puis refroidi brutalement par des jets d'air froid.

Après ce traitement, le vitrage revêtu et trempé présente les propriétés suivantes :
TL= 79,7% ; RL= 8,1%; FS=47,9% ε (émissivité)= 0,022;
la teinte en transmission est exprimée par les valeurs suivantes :
   L*=91,6; a*=-3,4 ; b*=+3,0 ;
   et la teinte en réflexion côté verre est exprimée par les valeurs suivantes :
      L*=34,2 ; a*=-1,1 ; b*=-7,2 ; λ_{D}= 473,2 nm; p= 14,6% ;

Ce vitrage revêtu et trempé est ensuite assemblé en double vitrage avec une autre feuille de verre clair de 4 mm, le revêtement étant disposé côté de l'espace intérieur du double vitrage. L'espace entre les deux feuilles est de 15 mm et l'air y est remplacé par de l'argon. En observant le double vitrage côté verre du vitrage revêtu, le revêtement étant placé en position 2, c'est-à-dire qu'on voit d'abord le vitrage pourvu du revêtement observé côté verre, puis la feuille de verre clair sans couche, on note les propriétés suivantes :
TL= 72%; RL= 13,2% ; FS=41,8% ; S=1,7 valeur U= 1,05 W/(m².K);
la teinte en transmission est exprimée par les valeurs suivantes :
   L*=88,0 ; a*=-4,2 ; b*= +3,1
   la teinte en réflexion est exprimée par les valeurs suivantes :
      L*=43,1 ; a*=-2,3; b*=-4,4; λ_{D}= 477,1 nm; p= 8,8%.

Lorsqu'on dispose le vitrage double de l'exemple 1 à côté du vitrage double de l'exemple 2, dans la même position, l'aspect visuel est semblable. D'autre part, les propriétés énergétiques sont comparables. Ces deux vitrages doubles peuvent donc même être installés à proximité l'un de l'autre dans un même bâtiment. On constate dès lors qu'il n'est pas nécessaire de modifier la structure du revêtement multicouche lorsque l'épaisseur de la feuille de verre change pour obtenir les mêmes propriétés, ce qui est très avantageux du point de vue d'une fabrication en série.

### Exemples 3 à 6.

Les exemples suivants sont réalisés de la même manière que l'exemple 1. Les structures des revêtements correspondants sont données dans le tableau 1 ci-dessous (D1= premier diélectrique, D2= second diélectrique, D3= troisième diélectrique, IR1= première couche réfléchissant l'infrarouge à base d'argent, IR2= seconde couche réfléchissant l'infrarouge, P1= première couche barrière, P2= seconde couche barrière, CS= couche supérieure de protection ; ZSO5= oxyde mixte zinc étain obtenu par pulvérisation cathodique dans une atmosphère oxydante à partir d'une cible métallique d'un alliage de ZnSn à 52% de Zn et 48% de Sn ; ZSO9= oxyde mixte zinc étain obtenu par pulvérisation cathodique dans une atmosphère oxydante à partir d'une cible métallique d'un alliage de ZnSn à 90% de Zn et 10% de Sn ; L_{RV}*, a_{RV}*, b_{RV}* représentent les valeurs CIELAB 1976 de la teinte en réflexion côté verre; λ_{d(RV)} et p_{(RV)} représentent la longueur d'onde dominante et la pureté de la teinte en réflexion côté verre). Les feuilles de verre des exemples 3 à 5 ont 4 mm d'épaisseur, celle de l'exemple 6 a 6 mm d'épaisseur.

**Tableau 1.**

| Ex. | D1 (nm) | | IR1 (nm) | P1 (nm) | | D2 (nm) | | IR2 (nm) | P2 (nm) | | D3 (nm) | | CS (nm) |
|---|---|---|---|---|---|---|---|---|---|---|---|---|---|
| 3 | ZSO5 (22) | ZSO9 (9) | Ag (10,3) | NiCr (1) | Ti (2,5) | ZSO5 (70) | ZSO9 (8,5) | Ag (14,7) | NiCr (1) | Ti (2,5) | ZSO9 (8,5) | ZSO5 (24) | TiN (3,0) |
| 4 | ZSO5 (22) | ZSO9 (9) | Ag (10,3) | NiCr (1) | Ti (2,5) | ZSO5 (72) | ZSO9 (9) | Ag (14,6) | NiCr (1) | Ti (2,7) | ZSO9 (11) | ZSO5 (29) | TiN (2,5) |
| 5 | ZSO5 (27) | ZSO9 (9) | Ag (10,3) | NiCr (1) | Ti (2,4) | ZSO5 (71) | ZSO9 (12) | Ag (14,5) | NiCr (1) | Ti (2,4) | ZSO9 (9) | ZSO5 (20) | TiN (3,0) |
| 6 | ZSO5 (27) | ZSO9 (9) | Ag (10,3) | NiCr (1) | Ti (2,5) | ZSO5 (71) | ZSO9 (12) | Ag (14,7) | NiCr (1) | Ti (2,5) | ZSO9 (9) | ZSO5 (25) | TiN (2,5) |

Les propriétés optiques et énergétiques des vitrages revêtus, à la sortie du dispositif de dépôt de couche, sont données dans le tableau 2.

**Tableau 2.**

| Ex. | TL (%) | RL (%) | FS (%) | ε | L_{RV}* | a_{RV}* | b_{RV}* | λ_{d(RV)} (nm) | p_{(RV)} (%) |
|---|---|---|---|---|---|---|---|---|---|
| 3 | 72,0 | 6,5 | 41,6 | 0,030 | 31,5 | 3,1 | -17,5 | - | - |
| 4 | 70,1 | 7,0 | 41,5 | 0,025 | 32,5 | 3,6 | -20,3 | 467,8 | 35,4 |
| 5 | 66,3 | 9,0 | 39,7 | 0,030 | 35,5 | -1,7 | -14,2 | - | - |
| 6 | 69,8 | 7,9 | 43,2 | 0,030 | 34,3 | 3,4 | -16,4 | 466,7 | 27,6 |

Les propriétés optiques et énergétiques des vitrages revêtus, ayant subi un traitement thermique de trempe comme dans l'exemple 1, sont données dans le tableau 3.

**Tableau 3.**

| Ex. | TL (%) | RL (%) | FS (%) | ε | L_{RV}* | a_{RV}* | b_{RV}* | λ_{d(RV)} (nm) | p_{(RV)} (%) |
|---|---|---|---|---|---|---|---|---|---|
| 3 | 82,6 | 6,2 | 47,5 | 0,020 | 30,0 | 0,9 | -7,2 | 468,6 | 14,1 |
| 4 | 81,2 | 7,5 | 47,4 | 0,018 | 33,0 | -0,3 | -8,7 | 471,5 | 17,1 |
| 5 | 75,5 | 9,4 | 45,9 | 0,020 | 36,7 | -3,9 | -3,9 | 480,2 | 10,4 |
| 6 | 80,4 | 8,5 | 49,8 | 0,020 | 35,1 | 1,0 | -5,5 | 466,8 | 9,5 |

Les propriétés optiques et énergétiques des vitrages revêtus montés en vitrage double de la même manière que dans l'exemple 1, avec une feuille de verre clair de 6 mm, sont données dans le tableau 4.

**Tableau 4.**

| Ex. | TL (%) | RL (%) | FS (%) | S | U (ou g) W/(m².K) | L_{RV}* | a _{RV}* | b_{RV}* | λ_{d(RV)} (nm) | p_{(RV)} (%) |
|---|---|---|---|---|---|---|---|---|---|---|
| 3 | 74,2 | 11,7 | 41,9 | 1,8 | 1,04 | 40,8 | -1,2 | -3,8 | 475,2 | 7,3 |
| 4 | 74,1 | 13,0 | 42,2 | 1,8 | 1,03 | 42,8 | -1,6 | -5,4 | 475,1 | 9,9 |
| 5 | 68,2 | 14,0 | 40,2 | 1,7 | 1,08 | 44,2 | -4,1 | -2,1 | 483,3 | 6,5 |
| 6 | 71,8 | 13,7 | 43,7 | 1,6 | 1,04 | 43,8 | -0,8 | -3,2 | 474,4 | 5,6 |

## Revendications

1. Vitrage, apte à subir un traitement thermique du type trempe ou bombage, comprenant au moins un revêtement multicouche déposé sur une feuille de verre, le revêtement multicouche comprenant, en séquence à partir de la feuille de verre, au moins :
a) un premier diélectrique, comportant au moins une couche comportant un oxyde mixte zinc-étain contenant au moins 12% d'étain, de préférence au moins 20% d'étain,
b) une première couche réfléchissant l'infrarouge à base d'argent,
d) un second diélectrique,
e) une seconde couche réfléchissant l'infrarouge à base d'argent,
g) un troisième diélectrique, comportant au moins une couche comportant un oxyde mixte zinc-étain contenant au moins 12% d'étain, de préférence au moins 20% d'étain,
h) une couche supérieure de protection,
le revêtement étant **caractérisé en ce que** la couche supérieure de protection h) est à base de nitrure ou d'oxynitrure de Ti, Zr, Hf, V, Nb, Ta, Cr, de leurs alliages, ou à base de nitrure ou d'oxynitrure d'alliage d'un ou plusieurs de ces métaux avec Al et/ou B.

2. Vitrage selon la revendication 1, **caractérisé en ce que** la couche supérieure de protection est à base de TiN.

3. Vitrage selon l'une des revendications 1 ou 2, **caractérisé en ce que** le second diélectrique comporte au moins une couche comportant un oxyde mixte zinc-étain.

4. Vitrage selon l'une des revendications 1 à 3, **caractérisé en ce qu'**au moins un des premier, second ou troisième diélectriques comporte au moins deux couches d'oxyde mixte zinc-étain de compositions différentes, la couche la plus riche en zinc étant disposée le plus près de, et de préférence en contact direct avec, la couche réfléchissant l'infrarouge à base d'argent qui lui succède dans la dite séquence.

5. Vitrage selon la revendication 4, **caractérisé en ce que** tous les diélectriques comportent au moins deux couches d'oxyde mixte zinc-étain de compositions différentes.

6. Vitrage selon l'une des revendications 4 ou 5, **caractérisé en ce que** le premier oxyde mixte zinc-étain comprend de 40 à 60% d'étain, de préférence pour former une composition proche du stannate de zinc Zn₂SnO₄, et le second oxyde mixte zinc-étain comprend de 80 à 98% de zinc, de préférence environ 90% de zinc et 10% d'étain.

7. Vitrage selon l'une des revendications 1 à 6, **caractérisé en ce qu'**une couche barrière est disposée sur au moins une des couches réfléchissant l'infrarouge, entre cette couche et le diélectrique qui lui fait suite dans la séquence.

8. Vitrage selon la revendication 7, **caractérisé en ce qu'**une couche barrière est disposée sur chacune des couches réfléchissant l'infrarouge.

9. Vitrage selon l'une des revendications 7 ou 8, **caractérisé en ce que** la ou au moins une des couches barrières comprend un premier mince film de métal ou de composé métallique et est surmontée d'un second mince film d'un composé d'un métal différent du premier mince film, les deux films étant disposés entre la couche réfléchissant l'infrarouge et le diélectrique qui suit dans la séquence.

10. Vitrage selon la revendication 9, **caractérisé en ce que** toutes les couches barrières comprennent un premier mince film de métal ou de composé métallique et sont surmontées d'un second mince film d'un composé d'un métal différent du premier mince film, les deux films étant tous deux disposés entre la couche réfléchissant l'infrarouge et le diélectrique qui suit dans la séquence.

11. Vitrage selon l'une des revendications 9 ou 10, **caractérisé en ce que** la ou au moins une des couches barrières est formée d'un premier mince film de NiCr, ou de sous-oxyde de NiCr, disposé directement sur l'argent et **en ce qu'**elle est surmontée d'un second mince film de TiO₂ disposé sur le mince film de NiCr ou de sous-oxyde de NiCr et sous le diélectrique qui suit dans la séquence.

12. Vitrage selon l'une des revendications 1 à 11, **caractérisé en ce que** le revêtement multicouche est tel que, lorsqu'il est déposé sur une feuille de verre sodo-calcique float clair ayant 4 mm d'épaisseur, le vitrage possède une transmission lumineuse TL, selon l'Illuminant D65/2°, d'au moins 65%, et de préférence d'au moins 68%, une réflexion lumineuse RL externe, selon le même Illuminant, inférieure à 12%, de préférence inférieure ou égale à 9% et un facteur solaire FS, évalué côté verre selon la norme ISO9050(2003), inférieur ou égale à 46%, de préférence inférieur ou égale à 45%.

13. Vitrage selon l'une des revendications 1 à 12, **caractérisé en ce que** le revêtement multicouche est tel que, lorsqu'il est déposé sur une feuille de verre sodo-calcique float clair ayant 4 mm d'épaisseur, il présente une teinte, examinée en réflexion côté verre sous l'Illuminant D65/10°, représentée par une valeur de L* comprise entre 28 et 37, une valeur de a* comprise entre -2 et +4 et une valeur de b* comprise entre -21 et -3.

14. Vitrage selon l'une des revendications 1 à 13, **caractérisé en ce que** le revêtement multicouche est tel que, lorsqu'il est déposé sur une feuille de verre sodo-calcique float clair ayant 4 mm d'épaisseur, il présente une teinte, examinée en transmission sous l'Illuminant D65/2°, représentée par une valeur de a* négative et une valeur de b* inférieure à +10, de préférence inférieure à +5.

15. Vitrage selon l'une des revendications 1 à 14, **caractérisé en ce qu'**il présente une émissivité ε égale ou inférieur à 0,035, de préférence égale ou inférieur à 0,03.

16. Vitrage selon l'une des revendications 1 à 15, **caractérisé en ce que** la feuille de verre a une épaisseur comprise entre 6 et 14 mm.

17. Vitrage selon l'une des revendications 1 à 16, **caractérisé en ce que** le revêtement multicouche présente essentiellement la structure suivante à partir du verre :
20-45 nm ZnSnOx / 9-11 nm Ag / première couche barrière / 70-85 nm ZnSnOx / 13-15 nm Ag / seconde couche barrière / 20-40 nm ZnSnOx / 2-6 nm TiN.

18. Vitrage selon la revendication 17, **caractérisé en ce que** le revêtement multicouche présente essentiellement la structure suivante à partir du verre :
29-37 nm d'oxyde mixte zinc-étain à plus de 40% Sn et plus de 30% Zn / 5-13 nm d'oxyde mixte zinc-étain à plus de 80% Zn et plus de 2% Sn / 9-11 nm Ag / 0^{.}5-2 nm NiCr / 2-6 nm TiO₂ / 65-80 nm d'oxyde mixte zinc-étain à plus de 40% Sn et plus de 30% Zn / 8-15 nm d'oxyde mixte zinc-étain à plus de 80% Zn et plus de 2% Sn / 13-15 nm Ag / 0^{.}5-2 nm NiCr / 2-6 nm TiO₂ / 5-13 nm d'oxyde mixte zinc-étain à plus de 80% Zn et plus de 2% Sn / 15-30 nm d'oxyde mixte zinc-étain à plus de 40% Sn et plus de 30% Zn / 2-6 nm TiN.

19. Vitrage trempé et/ou bombé, **caractérisé en ce qu'**il est constitué d'un vitrage selon l'une des revendications 1 à 18 qui a subi un traitement thermique de trempe et/ou de bombage après dépôt du revêtement multicouche.

20. Vitrage selon la revendication 19, **caractérisé en ce que** la couche supérieure de protection est à base d'oxyde de titane.

21. Vitrage selon la revendication 19, **caractérisé en ce que** le revêtement multicouche est tel que, lorsqu'il est déposé sur une feuille de verre sodo-calcique float clair ayant 4 mm d'épaisseur, le vitrage possède une transmission lumineuse TL, selon l'Illuminant D65_{/}2°, d'au moins 73%, et de préférence d'au moins 75%, une réflexion lumineuse RL externe, selon le même Illuminant, inférieure à 12%, de préférence inférieure ou égale à 9% et un facteur solaire FS, évalué côté verre selon la norme ISO9050(2003), inférieur à 50%, de préférence inférieur à 49%.

22. Vitrage selon la revendication 19, **caractérisé en ce que** le revêtement multicouche est tel que, lorsqu'il est déposé sur une feuille de verre sodo-calcique float clair ayant 4 mm d'épaisseur, le vitrage présente une teinte, examinée en réflexion côté verre sous l'Illuminant D65_{/}10°, représentée par une valeur de L* comprise entre 28 et 37, une valeur de a* comprise entre -2 et +2 et une valeur de b* comprise entre -2 et -10.

23. Vitrage selon la revendication 19, **caractérisé en ce que** le revêtement multicouche est tel que, lorsqu'il est déposé sur une feuille de verre sodo-calcique float clair ayant 4 mm d'épaisseur, il présente une teinte, examinée en transmission sous l'Illuminant D65/2°, représentée par une valeur de a* négative et une valeur de b* inférieure à +5.

24. Vitrage selon la revendication 19, **caractérisé en ce qu'**il présente une émissivité ε égale ou inférieur à 0,03, de préférence égale ou inférieur à 0,025.

25. Vitrage selon la revendication 19, **caractérisé en ce que** le revêtement multicouche présente la structure suivante à partir du verre :
20-45 nm ZnSnOx / 9-11 nm Ag / première couche barrière / 70-85 nm ZnSnOx / 13-15 nm Ag / seconde couche barrière / 20-40 nm ZnSnOx / 2-6 nm TiO₂.

26. Vitrage selon la revendication 25, **caractérisé en ce que** le revêtement multicouche présente la structure suivante à partir du verre :
29-37 nm d'oxyde mixte zinc-étain à plus de 40% Sn et plus de 30% Zn / 5-13 nm d'oxyde mixte zinc-étain à plus de 80% Zn et plus de 2% Sn / 9-11 nm Ag / 0^{.}5-2 nm NiCrOx / 2-6 nm TiO₂ / 65-80 nm d'oxyde mixte zinc-étain à plus de 40% Sn et plus de 30% Zn / 8-15 nm d'oxyde mixte zinc-étain à plus de 80% Zn et plus de 2% Sn / 13-15 nm Ag / 0^{.}5-2 nm NiCrOx / 2-6 nm TiO₂ / 5-13 nm d'oxyde mixte zinc-étain à plus de 80% Zn et plus de 2% Sn / 15-30 nm d'oxyde mixte zinc-étain à plus de 40% Sn et plus de 30% Zn / 2-6 nm TiO₂.

27. Ensemble de vitrages soit selon l'une des revendications 1 à 18 soit selon l'une des revendications 19 à 26, **caractérisé en ce qu'**il comprend au moins deux vitrages dont les feuilles de verre ont des épaisseurs qui diffèrent de plus de 10% et portent des revêtements multicouches ayant la même structure de couches, en ce y compris les épaisseurs de chacune des couches ou des films qui sont identiques à au plus 1% de différence, les deux vitrages étant d'aspect similaire après traitement thermique.

28. Ensemble de vitrages selon la revendication 27, **caractérisé en ce qu'**il comprend au moins un vitrage dont l'épaisseur de la feuille de verre est comprise entre 2 et 7 mm et un vitrage dont l'épaisseur de la feuille de verre est comprise entre 7 et 14 mm, et **en ce que** ces deux feuilles de verre portent des revêtements multicouches ayant la même structure de couches, en ce y compris les épaisseurs de chacune des couches ou des films qui sont identiques à au plus 1% de différence, les deux vitrages étant d'aspect similaire après traitement thermique.

29. Vitrage multiple comprenant au moins un vitrage selon l'une des revendications 19 à 26, **caractérisé en ce qu'**il possède, lorsqu'il est constitué par 2 feuilles de verre clair de 4 mm d'épaisseur, une transmission lumineuse TL d'au moins 68%, une réflexion lumineuse RL externe inférieur à 15%, un facteur solaire FS inférieur à 45%, évalué selon la norme ISO9050(2003), et une sélectivité S supérieure à 1,63.

30. Vitrage multiple selon la revendication 29, **caractérisé en ce qu'**il possède une transmission lumineuse TL d'au moins 70%, et de préférence d'au moins 72% et avantageusement d'au moins 73%, une réflexion lumineuse RL externe inférieur à 14%, un facteur solaire FS inférieur à 44% et une sélectivité S supérieure ou égale à 1,68 et de préférence supérieure ou égale à 1,7.

31. Vitrage multiple selon l'une des revendications 29 ou 30, **caractérisé en ce qu'**il présente un aspect neutre en réflexion à partir de l'extérieur, le revêtement multicouche étant en position 2, avec une pureté inférieure à 10 et une longueur d'onde dominante égale ou inférieure à 500 nm selon l'Illuminant D65/10°.

32. Vitrage multiple selon l'une des revendications 29 à 31, **caractérisé en ce que**, lorsqu'il est constitué par 2 feuilles de verre clair de 4 mm d'épaisseur et qu'il est examiné en réflexion sous l'Illuminant D65/10° avec le revêtement multicouche placé en position 2, il présente une teinte représentée par une valeur de L* comprise entre 40 et 45, une valeur de a* comprise entre -5,0 et +1 et une valeur de b* comprise entre -7,0 et -1,0.

33. Vitrage multiple selon l'une des revendications 29 à 32, **caractérisé en ce qu'**il présente une teinte, examinée en transmission sous l'Illuminant D65/2°, représentée par une valeur de a* négative et une valeur de b* inférieure à +5.

34. Vitrage multiple selon l'une des revendications 29 à 33, **caractérisé en ce que** sa valeur U, selon la norme ISO 10292, est égale ou inférieure à 1,1 W/(m².K), de préférence égale ou inférieure à 1,08 W/(m².K), et avantageusement égale ou inférieure à 1,05 W/(m².K), pour un espace entre les feuilles de verre de 15 mm rempli d'argon sensiblement pur.

35. Vitrage multiple selon l'une des revendications 29 à 33, **caractérisé en ce que** sa valeur U, selon la norme ISO 10292, est égale ou inférieure à 1,42 W/(m².K), de préférence égale ou inférieure à 1,4 W/(m².K), et avantageusement égale ou inférieure à 1,37 W/(m².K), pour un espace entre les feuilles de verre de 15 mm rempli d'air sec.

## Patentansprüche

1. Verglasung, an der sich eine Wärmebehandlung zum Biegen/Vorspannen vornehmen lässt und die mindestens eine mehrschichtige Beschichtung umfasst, die auf eine Glasscheibe aufgebracht ist, wobei die mehrschichtige Beschichtung in der Reihenfolge ausgehend von der Glasscheibe mindestens Folgendes umfasst:
a) ein erstes Dielektrikum, das mindestens eine Schicht aufweist, die ein Zink-Zinn-Mischoxid aufweist, das mindestens 12% Zinn, vorzugsweise mindestens 20% Zinn enthält,
b) eine erste Infrarotstrahlung reflektierende Schicht auf Basis von Silber,
d)ein zweites Dielektrikum,
e) eine zweite Infrarotstrahlung reflektierende Schicht auf Basis von Silber,
g) ein drittes Dielektrikum, das mindestens eine Schicht aufweist, die ein Zink-Zinn-Mischoxid aufweist, das mindestens 12% Zinn, vorzugsweise mindestens 20% Zinn enthält,
h)eine obere Schutzschicht, wobei die Beschichtung **dadurch gekennzeichnet ist, dass** die obere Schutzschicht h) eine Schicht auf Basis eines Nitrids oder Oxinitrids von Ti, Zr, Hf, V, Nb, Ta, Cr, ihren Legierungen oder auf Basis eines Nitrids oder Oxinitrids einer Legierung aus einem oder mehreren dieser Metalle mit Al und/oder B ist.

2. Verglasung nach Anspruch 1, **dadurch gekennzeichnet, dass** die obere Schutzschicht eine Schicht auf Basis von TiN ist.

3. Verglasung nach Anspruch 1 oder 2, **dadurch gekennzeichnet, dass** das zweite Dielektrikum mindestens eine Schicht aufweist, die ein Zink-Zinn-Mischoxid aufweist.

4. Verglasung nach einem der Ansprüche 1 bis 3, **dadurch gekennzeichnet, dass** mindestens eins von dem ersten, zweiten oder dritten Dielektrikum mindestens zwei Schichten aus Zink-Zinn-Mischoxid mit unterschiedlicher Zusammensetzung aufweist, wobei die Schicht, die am meisten Zink enthält, am nächsten an der Infrarotstrahlung reflektierenden Schicht auf Basis von Silber, die in der Reihenfolge darauf folgt, liegt und sie vorzugsweise direkt berührt.

5. Verglasung nach Anspruch 4, **dadurch gekennzeichnet, dass** alle Dielektrika mindestens zwei Schichten aus Zink-Zinn-Mischoxid mit unterschiedlicher Zusammensetzung aufweisen.

6. Verglasung nach Anspruch 4 oder 5, **dadurch gekennzeichnet, dass** das erste Zink-Zinn-Mischoxid 40 bis 60% Zinn umfasst, vorzugsweise zur Bildung einer Zusammensetzung, die Zinkstannat Zn₂SnO₄ ähnelt, und das zweite Zink-Zinn-Mischoxid 80 bis 98% Zink, vorzugsweise ungefähr 90% Zink und 10% Zinn umfasst.

7. Verglasung nach einem der Ansprüche 1 bis 6, **dadurch gekennzeichnet, dass** eine Grenzschicht auf mindestens einer der Infrarotstrahlung reflektierenden Schichten, zwischen dieser Schicht und dem Dielektrikum, das in der Reihenfolge darauf folgt, angeordnet ist.

8. Verglasung nach Anspruch 7, **dadurch gekennzeichnet, dass** eine Grenzschicht auf jeder der Infrarotstrahlung reflektierenden Schichten angeordnet ist.

9. Verglasung nach Anspruch 7 oder 8, **dadurch gekennzeichnet, dass** die Grenzschicht oder mindestens eine der Grenzschichten einen ersten Dünnfilm aus Metall oder einer Metallverbindung umfasst und darüber ein zweiter Dünnfilm aus einem anderen Metall als dem des ersten Dünnfilms liegt, wobei die beiden Filme zwischen der Infrarotstrahlung reflektierenden Schicht und dem Dielektrikum angeordnet sind, das sich in der Reihenfolge anschließt.

10. Verglasung nach Anspruch 9, **dadurch gekennzeichnet, dass** sämtliche Grenzschichten einen ersten Dünnfilm aus Metall oder einer Metallverbindung umfassen und darüber ein zweiter Dünnfilm aus einer Verbindung eines anderen Metalls als dem des ersten Dünnfilms liegt, wobei die zwei Filme beide zwischen der Infrarotstrahlung reflektierenden Schicht und dem Dielektrikum angeordnet sind, das sich in der Reihenfolge anschließt.

11. Verglasung nach Anspruch 9 oder 10, **dadurch gekennzeichnet, dass** die Grenzschicht oder mindestens eine der Grenzschichten aus einem ersten Dünnfilm aus NiCr oder einem NiCr-Suboxid gebildet ist, der direkt auf dem Silber angeordnet ist, und dadurch, dass darüber ein zweiter Dünnfilm aus TiO₂ liegt, der auf dem Dünnfilm aus NiCr oder einem NiCr-Suboxid und unter dem Dielektrikum angeordnet ist, das sich in der Reihenfolge anschließt.

12. Verglasung nach einem der Ansprüche 1 bis 11, **dadurch gekennzeichnet, dass** die mehrschichtige Beschichtung derart ist, dass bei Aufbringung auf einer klaren Kalk-Natron-Floatglasscheibe mit einer Dicke von 4 mm die Verglasung eine Lichtdurchlässigkeit TL bei Normlicht D65/2° von mindestens 65% und vorzugsweise mindestens 68%, eine Lichtreflexion RL außen bei demselben Normlicht von unter 12%, vorzugsweise kleiner gleich 9% und einen auf der Glasseite nach der Norm ISO9050(2003) bestimmten Gesamtenergiedurchlassgrad FS von kleiner gleich 46%, vorzugsweise kleiner gleich 45% aufweist.

13. Verglasung nach einem der Ansprüche 1 bis 12, **dadurch gekennzeichnet, dass** die mehrschichtige Beschichtung derart ist, dass sie bei Aufbringung auf einer klaren Kalk-Natron-Floatglasscheibe mit einer Dicke von 4 mm eine in Reflexion auf der Glasseite unter Normlicht D65/10° geprüfte Farbe aufweist, die einen Wert für L* zwischen 28 und 37, einen Wert für a* zwischen -2 und +4 und einen Wert für b* zwischen -21 und -3 aufweist.

14. Verglasung nach einem der Ansprüche 1 bis 13, **dadurch gekennzeichnet, dass** die mehrschichtige Beschichtung derart ist, dass sie bei Aufbringung auf einer klaren Kalk-Natron-Floatglasscheibe mit einer Dicke von 4 mm Dicke eine in Transmission unter Normlicht D65/2° geprüfte Farbe aufweist, die einen negativen Wert für a* und einen Wert für b* unter +10, vorzugsweise unter +5 aufweist.

15. Verglasung nach einem der Ansprüche 1 bis 14, **dadurch gekennzeichnet, dass** sie einen Emissionsgrad ε kleiner gleich 0,035, vorzugsweise kleiner gleich 0,03 aufweist.

16. Verglasung nach einem der Ansprüche 1 bis 15, **dadurch gekennzeichnet, dass** die Glasscheibe eine Dicke zwischen 6 und 14 mm aufweist.

17. Verglasung nach einem der Ansprüche 1 bis 16, **dadurch gekennzeichnet, dass** die mehrschichtige Beschichtung ausgehend vom Glas im Wesentlichen folgenden Aufbau aufweist:
20-45 nm ZnSnOx / 9-11 nm Ag / erste Grenzschicht / 70-85 nm ZnSnOx/ 13-15 nm Ag / zweite Grenzschicht / 20-40 nm ZnSnOx / 2-6 nm TiN.

18. Verglasung nach Anspruch 17, **dadurch gekennzeichnet, dass** die mehrschichtige Beschichtung ausgehend vom Glas im Wesentlichen folgenden Aufbau aufweist:
29-37 nm Zink-Zinn-Mischoxid mit mehr als 40% Sn und mehr als 30% Zn / 5-13 nm Zink-Zinn-Mischoxid mit mehr als 80% Zn und mehr als 2% Sn / 9-11 nm Ag / 0,5-2 nm NiCr / 2-6 nm TiO₂ / 65-80 nm Zink-Zinn-Mischoxid mit mehr als 40% Sn und mehr als 30% Zn / 8-15 nm Zink-Zinn-Mischoxid mit mehr als 80% Zn und mehr als 2% Sn / 13-15 nm Ag / 0,5-2 nm NiCr / 2-6 nm TiO₂ / 5-13 nm Zink-Zinn-Mischoxid mit mehr als 80% Zn und mehr als 2% Sn / 15-30 nm Zink-Zinn-Mischoxid mit mehr als 40% Sn und mehr als 30% Zn / 2-6 nm TiN.

19. Vorgespannte und/oder gebogene Verglasung, **dadurch gekennzeichnet, dass** sie aus einer Verglasung nach einem der Ansprüche 1 bis 18 gebildet ist, an der nach dem Aufbringen der mehrschichtigen Beschichtung eine Biege-/Spann-Wärmebehandlung vorgenommen wurde.

20. Verglasung nach Anspruch 19, **dadurch gekennzeichnet, dass** die obere Schutzschicht eine Schicht auf Basis von Titanoxid ist.

21. Verglasung nach Anspruch 19, **dadurch gekennzeichnet, dass** die mehrschichtige Beschichtung derart ist, dass bei Aufbringung auf einer klaren Kalk-Natron-Floatglasscheibe mit einer Dicke von 4 mm die Verglasung eine Lichtdurchlässigkeit TL bei Normlicht D65/2° von mindestens 73% und vorzugsweise mindestens 75%, eine Lichtreflexion RL außen bei demselben Normlicht von unter 12%, vorzugsweise kleiner gleich 9%, und einen auf der Glasseite nach der Norm IS09050(2003) bestimmten Gesamtenergiedurchlassgrad FS von kleiner als 50%, vorzugsweise kleiner als 49% aufweist.

22. Verglasung nach Anspruch 19, **dadurch gekennzeichnet, dass** die mehrschichtige Beschichtung derart ist, dass bei Aufbringung auf einer klaren Kalk-Natron-Floatglasscheibe mit einer Dicke von 4 mm die Verglasung eine in Reflexion auf der Glasseite unter Normlicht D65/10° geprüfte Farbe aufweist, die einen Wert für L* zwischen 28 und 37, einen Wert für a* zwischen -2 und +2 und einen Wert für b* zwischen -2 und -10 aufweist.

23. Verglasung nach Anspruch 19, **dadurch gekennzeichnet, dass** die mehrschichtige Beschichtung derart ist, dass sie bei Aufbringung auf einer klaren Kalk-Natron-Floatglasscheibe mit einer Dicke von 4 mm eine in Transmission unter Normlicht D65/2° geprüfte Farbe aufweist, die einen negativen Wert für a* und einen Wert für b* von unter +5 aufweist.

24. Verglasung nach Anspruch 19, **dadurch gekennzeichnet, dass** sie einen Emissionsgrad ε kleiner gleich 0,03, vorzugsweise kleiner gleich 0,025 aufweist.

25. Verglasung nach Anspruch 19, **dadurch gekennzeichnet, dass** die mehrschichtige Beschichtung ausgehend vom Glas folgenden Aufbau aufweist: 20-45 nm ZnSnOx / 9-11 nm Ag / erste Grenzschicht / 70-85 nm ZnSnOx/ 13-15 nm Ag / zweite Grenzschicht / 20-40 nm ZnSnOx / 2-6 nm TiO₂.

26. Verglasung nach Anspruch 25, **dadurch gekennzeichnet, dass** die mehrschichtige Beschichtung ausgehend vom Glas folgenden Aufbau aufweist:
29-37 nm Zink-Zinn-Mischoxid mit mehr als 40% Sn und mehr als 30% Zn / 5-13 nm Zink-Zinn-Mischoxid mit mehr als 80% Zn und mehr als 2% Sn / 9-11 nm Ag / 0,5-2 nm NiCrOx / 2-6 nm TiO₂ / 65-80 nm Zink-Zinn-Mischoxid mit mehr als 40% Sn und mehr als 30% Zn / 8-15 nm Zink-Zinn-Mischoxid mit mehr als 80% Zn und mehr als 2% Sn / 13-15 nm Ag / 0,5-2 nm NiCrOx / 2-6 nm TiO₂ / 5-13 nm Zink-Zinn-Mischoxid mit mehr als 80% Zn und mehr als 2% Sn / 15-30 nm Zink-Zinn-Mischoxid mit mehr als 40% Sn und mehr als 30% Zn / 2-6 nm TiO₂.

27. Anordnung von Verglasungen entweder nach einem der Ansprüche 1 bis 18 oder einem der Ansprüche 19 bis 26, **dadurch gekennzeichnet, dass** sie mindestens zwei Verglasungen umfasst, deren Glasscheiben eine Dicke aufweisen, die sich um mehr als 10% unterscheiden und mehrschichtige Beschichtungen aufweisen, die denselben Schichtaufbau aufweisen, wobei dazu gehört, dass die Dicken von jeder der Schichten oder Filme bis auf einen Unterschied von höchstens 1% identisch sind, wobei die beiden Verglasungen nach der Wärmebehandlung ähnlich aussehen.

28. Anordnung von Verglasungen nach Anspruch 27, **dadurch gekennzeichnet, dass** sie mindestens eine Verglasung umfasst, deren Glasscheibe eine Dicke zwischen 2 und 7 mm aufweist, und eine Verglasung, deren Glasscheibe eine Dicke zwischen 7 und 14 mm aufweist, und dadurch, dass diese beiden Glasscheiben mehrschichtige Beschichtungen aufweisen, die denselben Schichtaufbau aufweisen, wobei dazu gehört, dass die Dicken von jeder der Schichten oder Filme bis auf einen Unterschied von höchstens 1% identisch sind, wobei die beiden Verglasungen nach der Wärmebehandlung ähnlich aussehen.

29. Mehrfachverglasung, die mindestens eine Verglasung nach einem der Ansprüche 19 bis 26 umfasst, **dadurch gekennzeichnet, dass** sie, wenn sie aus zwei klaren Glasscheiben mit einer Dicke von 4 mm gebildet ist, eine Lichtdurchlässigkeit TL von mindestens 68%, eine Lichtreflexion RL außen von unter 15%, einen nach der Norm IS09050 (2003) bestimmten Gesamtenergiedurchlassgrad FS unter 45% und eine Selektivität S von über 1,63 aufweist.

30. Mehrfachverglasung nach Anspruch 29, **dadurch gekennzeichnet, dass** sie eine Lichtdurchlässigkeit TL von mindestens 70% und vorzugsweise mindestens 72% und vorteilhafterweise mindestens 73%, eine Lichtreflexion RL außen von unter 14%, einen Gesamtenergiedurchlassgrad FS von unter 44% und eine Selektivität S von größer gleich 1,68 und vorzugsweise größer gleich 1,7 aufweist.

31. Mehrfachverglasung nach Anspruch 29 oder 30, **dadurch gekennzeichnet, dass** sie bei Reflexion von außen eine neutrale Optik aufweist, wenn sich die mehrschichtige Beschichtung an Position 2 befindet, mit einer Reinheit von unter 10 und einer bunttongleichen Wellenlänge von kleiner gleich 500 nm bei Normlicht D65/10°.

32. Mehrfachverglasung nach einem der Ansprüche 29 bis 31, **dadurch gekennzeichnet, dass** sie, wenn sie von zwei klaren Glasscheiben mit einer Dicke von 4 mm gebildet ist und in Reflexion bei Normlicht D65/10° geprüft wird, wenn sich die mehrschichtige Beschichtung an Position 2 befindet, eine Farbe aufweist, die einen Wert für L* zwischen 40 und 45, einen Wert für a* zwischen -5,0 und +1 und einen Wert für b* zwischen - 7,0 und -1,0 aufweist.

33. Mehrfachverglasung nach einem der Ansprüche 29 bis 32, **dadurch gekennzeichnet, dass** sie eine in Transmission unter Normlicht D65/2° geprüfte Farbe aufweist, die einen negativen Wert für a* und einen Wert für b* unter +5 aufweist.

34. Mehrfachverglasung nach einem der Ansprüche 29 bis 33, **dadurch gekennzeichnet, dass** ihr U-Wert nach der Norm ISO 10292 kleiner gleich 1,1 W/(m².K), vorzugsweise kleiner gleich de 1,08 W/(m².K) und vorteilhafterweise kleiner gleich 1,05 W/(m².K) ist, wobei der Zwischenraum zwischen den Glasscheiben von 15 mm mit im Wesentlichen reinem Argon gefüllt ist.

35. Mehrfachverglasung nach einem der Ansprüche 29 bis 33, **dadurch gekennzeichnet, dass** ihr U-Wert nach der Norm ISO 10292 kleiner gleich 1,42 W/(m².K), vorzugsweise kleiner gleich 1,4 W/(m².K) und vorteilhafterweise kleiner gleich 1,37 W/(m².K) ist, wobei der Zwischenraum zwischen den Glasscheiben von 15 mm mit Trockenluft gefüllt ist.

## Claims

1. Glazing, capable of undergoing a heat treatment of the tempering or bending type, comprising at least one multilayer coating deposited on a glass sheet, the multilayer coating comprising, in sequence starting from the glass sheet, at least:
a) a first dielectric, comprising at least one layer comprising a mixed zinc/tin oxide containing at least 12% of tin, preferably at least 20% of tin,
b) a first silver-based infrared-reflecting layer,
d) a second dielectric,
e) a second silver-based infrared-reflecting layer,
g) a third dielectric, comprising at least one layer comprising a zinc/tin mixed oxide containing at least 12% of tin, preferably at least 20% of tin,
h) an upper protective layer,
the coating being **characterized in that** the upper protective layer h) is based on nitride or oxynitride of Ti, Zr, Hf, V, Nb, Ta, Cr, of their alloys, or based on nitride or on oxynitride of alloy of one or more of these metals with Al and/or B.

2. Glazing according to Claim 1, **characterized in that** the upper protective layer is based on TiN.

3. Glazing according to either of Claims 1 and 2, **characterized in that** the second dielectric comprises at least one layer comprising a mixed zinc/tin oxide.

4. Glazing according to one of Claims 1 to 3, **characterized in that** at least one of the first, second or third dielectrics comprises at least two layers of mixed zinc/tin oxide of different compositions, the layer richest in zinc being positioned closest to, and preferably in direct contact with, the silver-based infrared-reflecting layer which succeeds in the said sequence.

5. Glazing according to Claim 4, **characterized in that** all the dielectrics comprise at least two layers of mixed zinc/tin oxide of different compositions.

6. Glazing according to either of Claims 4 and 5, **characterized in that** the first mixed zinc/tin oxide comprises from 40% to 60% of tin, preferably in order to form a composition close to zinc stannate Zn₂SnO₄, and the second mixed zinc/tin oxide comprises from 80% to 98% of zinc, preferably approximately 90% of zinc and 10% of tin.

7. Glazing according to one of Claims 1 to 6, **characterized in that** a barrier layer is positioned on at least one of the infrared-reflecting layers, between this layer and the dielectric which follows it in the sequence.

8. Glazing according to Claim 7, **characterized in that** a barrier layer is positioned on each of the infrared-reflecting layers.

9. Glazing according to either of Claims 7 and 8, **characterized in that** the or at least one of the barrier layers comprises a first thin film of metal or of metal compound and is surmounted by a second thin film of a compound of a metal different from the first thin film, the two films being positioned between the infrared-reflecting layer and the dielectric which follows in the sequence.

10. Glazing according to Claim 9, **characterized in that** all the barrier layers comprise a first thin film of metal or of metal compound and are selected by a second thin film of a compound of a metal different from the first thin film, the two films both being positioned between the infrared-reflecting layer and the dielectric which follows in the sequence.

11. Glazing according to either of Claims 9 and 10, **characterized in that** the or at least one of the barrier layers is formed of a first thin film of NiCr or of NiCr suboxide deposited directly on the silver and that it is surmounted by a second thin film of TiO₂ deposited on the thin film of NiCr or of NiCr suboxide and under the dielectric which follows in the sequence.

12. Glazing according to one of Claims 1 to 11, **characterized in that** the multilayer coating is such that, when it is deposited on a sheet of clear soda-lime float glass having a thickness of 4 mm, the glazing has a light transmission TL, under Illuminant D65/2°, of at least 65% and preferably of at least 68%, an external light reflection RL, according to the same Illuminant, of less than 12%, preferably of less than or equal to 9%, and a solar factor SF, evaluated on the glass side, according to standard ISO 9050 (2003), of less than or equal to 46%, preferably of less than or equal to 45%.

13. Glazing according to one of Claims 1 to 12, **characterized in that** the multilayer coating is such that, when it is deposited on a sheet of clear soda-lime float glass having a thickness of 4 mm, it exhibits a tint, examined in reflection on the glass side under Illuminant D65/10°, represented by a value of L* of between 28 and 37, a value of a* of between -2 and +4 and a value of b* of between -21 and -3.

14. Glazing according to one of Claims 1 to 13, **characterized in that** the multilayer coating is such that, when it is deposited on a sheet of clear soda-lime float glass having a thickness of 4 mm, it exhibits a tint, examined in transmission under Illuminant D65/2°, represented by a negative value of a* and a value of b* of less than +10, preferably of less than +5.

15. Glazing according to one of Claims 1 to 14, **characterized in that** it exhibits an emissivity ε equal to or less than 0.035, preferably equal to or less than 0.03.

16. Glazing according to one of Claims 1 to 15, **characterized in that** the glass sheet has a thickness of between 6 and 14 mm.

17. Glazing according to one of Claims 1 to 16, **characterized in that** the multilayer coating exhibits essentially the following structure, starting from the glass:
20-45 nm ZnSnOₓ/9-11 nm Ag/first barrier layer/70-85 nm ZnSnOₓ/13-15 nm Ag/second barrier layer/20-40 nm ZnSnOₓ/2-6 nm TiN.

18. Glazing according to Claim 17, **characterized in that** the multilayer coating exhibits essentially the following structure, starting from the glass: 29-37 nm of mixed zinc/tin oxide having more than 40% Sn and more than 30% Zn/5-13 nm of mixed zinc/tin oxide having more than 80% Zn and more than 2% Sn/9-11 nm Ag/0.5-2 nm NiCr/2-6 nm TiO₂/65-80 nm of mixed zinc/tin oxide having more than 40% Sn and more than 30% Zn/8-15 nm of mixed zinc/tin oxide having more than 80% Zn and more than 2% Sn/13-15 nm Ag/0.5-2 nm NiCr/2-6 nm TiO₂/5-13 nm of mixed zinc/tin oxide having more than 80% Zn and more than 2% Sn/15-30 nm of mixed zinc/tin oxide having more than 40% Sn and more than 30% Zn/2-6 nm TiN.

19. Tempered and/or bent glazing, **characterized in that** it is formed of a glazing according to one of Claims 1 to 18 which has undergone a thermal tempering and/or bending treatment after deposition of the multilayer coating.

20. Glazing according to Claim 19, **characterized in that** the upper protective layer is based on titanium oxide.

21. Glazing according to Claim 19, **characterized in that** the multilayer coating is such that, when it is deposited on a sheet of clear soda-lime float glass having a thickness of 4 mm, the glazing has a light transmission TL, according to Illuminant D65/2°, of at least 73% and preferably of at least 75%, an external light reflection RL, according to the Illuminant, of less than 12%, preferably of less than or equal to 9%, and a solar factor SF, evaluated on the glass side according to standard ISO 9050 (2003), of less than 50%, preferably of less than 49%.

22. Glazing according to Claim 19, **characterized in that** the multilayer coating is such that, when it is deposited on a sheet of clear soda-lime float glass having a thickness of 4 mm, the glazing exhibits a tint, examined in reflection on the glass side under Illuminant D65/10°, represented by a value of L* of between 28 and 37, a value of a* of between -2 and +2 and a value of b* of between -2 and -10.

23. Glazing according to Claim 19, **characterized in that** the multilayer coating is such that, when it is deposited on a sheet of clear soda-lime float glass having a thickness of 4 mm, it exhibits a tint, examined in transmission under Illuminant D65/2°, represented by a negative value of a* and a value of b* of less than +5.

24. Glazing according to Claim 19, **characterized in that** it exhibits an emissivity ε equal to or less than 0.03, preferably equal to or less than 0.025.

25. Glazing according to Claim 19, **characterized in that** the multilayer coating exhibits the following structure, starting from the glass: 20-45 nm ZnSnOₓ/9-11 nm Ag/first barrier layer/70-85 nm ZnSnOₓ/13-15 nm Ag/second barrier layer/20-40 nm ZnSnOₓ/2-6 nm TiO₂.

26. Glazing according to Claim 25, **characterized in that** the multilayer coating exhibits the following structure, starting from the glass:
29-37 nm of mixed zinc/tin oxide having more than 40% Sn and more than 30% Zn/5-13 nm of mixed zinc/tin oxide having more than 80% Zn and more than 2% Sn/9-11 nm Ag/0.5-2 nm NiCrOₓ/2-6 nm TiO₂/65-80 nm of mixed zinc/tin oxide having more than 40% Sn and more than 30% Zn/8-15 nm of mixed zinc/tin oxide having more than 80% Zn and more than 2% Sn/13-15 nm Ag/0.5-2 nm NiCrOₓ/2-6 nm TiO₂/5-13 nm of mixed zinc/tin oxide having more than 80% Zn and more than 2% Sn/15-30 nm of mixed zinc/tin oxide having more than 40% Sn and more than 30% Zn/2-6 nm TiO₂.

27. Assembly of glazing is either according to one of Claims 1 to 18 or according to one of Claims 19 to 26, **characterized in that** it comprises at least two glazings, the glass sheets of which have thicknesses which differ by more than 10% and carry multilayer coatings having the same structure of layers, including in this the thicknesses of each of the layers or of the films, which are identical to at most 1% in difference, the two glazings being of similar appearance after heat treatment.

28. Assembly of glazings according to Claim 27, **characterized in that** it comprises at least one glazing, the thickness of the glass sheet of which is between 2 and 7 mm, and one glazing, the thickness of the glass sheet of which is between 7 and 14 mm, and **in that** these two glass sheets carry multilayer coatings having the same structure of layers, including in this the thicknesses of each of the layers or of the films, which are identical to at most 1% in difference, the two glazings being of similar appearance after heat treatment.

29. Multilayer glazing comprising at least one glazing according to one of Claims 19 to 26, **characterized in that** it has, when it is formed by two clear glass sheets with a thickness of 4 mm, a light transmission TL of at least 68%, an external light reflection RL of less than 15%, a solar factor SF of less than 45%, evaluated according to standard ISO 9050 (2003), and a selectivity S of greater than 1.63.

30. Multiple glazing according to Claim 29, **characterized in that** it has a light transmission TL of at least 70% and preferably of at least 72% and advantageously of at least 73%, an external light reflection RL of less than 14%, of solar factor SF of less than 44% and a selectivity S of greater than or equal to 1.68 and preferably of greater than or equal to 1.7.

31. Multiple glazing according to either of Claims 29 and 30, **characterized in that** it exhibits a neutral appearance in reflection from the outside, the multilayer coating being in position 2, with a purity of less than 10 and a dominant wavelength equal to or less than 500 nm according to Illuminant D65/10°.

32. Multiple glazing according to one of Claims 29 to 31, **characterized in that**, when it is formed by two clear glass sheets with a thickness of 4 mm and when it is examined in reflection under Illuminant D65/10° with the multilayer coating placed in position 2, it exhibits a tint represented by a value L* of between 40 and 45, a value of a* of between -5.0 and +1 and a value of b* of between -7.0 and -1.0.

33. Multiple glazing according to one of Claims 29 to 32, **characterized in that** it exhibits a tint, examined in translation under Illuminant D65/2°, represented by a negative value of a* and a value of b* of less than +5.

34. Multiple glazing according to one of Claims 29 to 33, **characterized in that** its value U, according to the standard ISO 10292, is equal to or less than 1.1 W/(m².K), preferably equal to or less than 1.08 W/(m².K) and advantageously equal to or less than 1.05 W/(m².K), for a space between the glass sheets of 15 mm filled with substantially pure argon.

35. Multiple glazing according to one of Claims 29 to 33, **characterized in that** its value U, according to the standard ISO 10292, is equal to or less than 1.42 W/(m².K), preferably equal to or less than 1.4 W/(m².K) and advantageously equal to or less than 1.37 W/(m².K), for a space between the glass sheets of 15 mm filled with dry air.
